# EUROPEAN PATENT APPLICATION

(11) **EP 4 571 966 A1**
(43) Date of publication of application: **18.06.2025**
(21) Application number: 23852457.3
(22) Date of filing: 02.08.2023
(51) Int. Cl.: H01M 50/204, H01M 50/271, H01M 50/289, H01M 50/35

(54) **BATTERY PACK**

(30) Priority: 10.08.2022 JP 2022127754; 10.08.2022 JP 2022127755
(71) Applicant: AESC Japan Ltd., Kanagawa, 2520012 (JP)
(72) Inventor: TAKAGI, Gentarou, Zama-shi, Kanagawa 252-0012 (JP); YOSHIOKA, Shinichi, Zama-shi, Kanagawa 252-0012 (JP)
(74) Representative: Mathys & Squire
(86) International application number: PCT/JP2023/028268
(87) International publication number: WO 2024/034490

(57) **Abstract**

A battery pack (10A) includes a storage body (200) provided with a storage space (250) surrounded by a sealing member (230), a battery module (100) stored in the storage space (250), and a partition wall (214b) located between the battery module (100) and the sealing member (230). At least a portion of the partition wall (214b) is located at a higher elevation than an upper surface of the battery module (100).

## Description

### TECHNICAL FIELD

The present invention relates to a battery pack.

### BACKGROUND ART

In recent years, a battery pack used for various applications such as an automobile has been developed. The battery pack includes at least one battery module and a storage body storing the at least one module.

Patent Document 1 describes one example of a battery pack. In this battery pack, a storage body incudes a battery tray and a battery cover. The battery tray and the battery cover are attached to each other via a sealing member.

Patent Document 2 describes one example of a battery pack. In this battery pack, a storage body includes a main body portion and a lid portion. The main body portion and the lid portion are joined to each other in a joining portion. In the joining portion, the main body portion and the lid portion are welded to each other.

### RELATED DOCUMENT

### PATENT DOCUMENT

Patent Document 1: Japanese Patent Application Publication No. 2011-194982
Patent Document 2: Japanese Patent Application Publication No. 2021-111562

### SUMMARY OF THE INVENTION

### TECHNICAL PROBLEM

### (Aspect 1)

For example, as described in Patent Document 1, a storage space of a storage body may be surrounded by a sealing member. This case may require improvement of sealing of the storage space of the storage body.

One example of an object of the aspect 1 according to the present invention is to improve sealing of a storage space of a storage body. Another object of the aspect 1 according to the present invention may be apparent from description of the present specification.

### (Aspect 2)

For example, as described in Patent Document 1, a storage space of a storage body may be surrounded by a sealing member. This case may require improvement of sealing of the storage space of the storage body. The sealing member is preferably positioned accurately to improve sealing of the storage space. It may be, however, difficult to accurately position the sealing member simply by disposing the sealing member.

One example of an object of the aspect 2 according to the present invention is to improve sealing of a storage space of a storage body. Another object of the aspect 2 according to the present invention may be apparent from description of the present specification.

### SOLUTION TO PROBLEM

The aspect 1 according to the present invention is as described below.
[1.1] A battery pack including:
   a storage body provided with a storage space surrounded by a sealing member;
   a battery module stored in the storage space; and
   a partition wall located between the battery module and the sealing member, wherein
   at least a portion of the partition wall is located at a higher elevation than an upper surface of the battery module.
[1.2] The battery pack according to [1.1], wherein
   the at least a portion of the partition wall is located at a higher elevation than an upper surface of the sealing member.
[1.3] The battery pack according to [1.1] or [1.2], wherein
   the storage body is provided with a gas discharge hole to discharge gas generated from the storage space, and
   at least a portion of the partition wall is disposed above the gas discharge hole.
[1.4] The battery pack according to any one of [1.1] to [1.3], wherein
   the partition wall is a part of the storage body.
[1.5] A battery pack including:
   a storage body provided with a storage space surrounded by a sealing member;
   a battery module stored in the storage space; and
   a cover portion that covers a surface of the sealing member on an opposite side of the storage space, wherein
   at least a portion of the cover portion is located at a lower elevation than a lower surface of the sealing member.
[1.6] The battery pack according to [1.5], wherein
   the cover portion is a part of the storage body.
[1.7] The battery pack according to [1.5] or [1.6], further including
   a projected portion provided below the cover portion and projecting outward more than the cover portion.
[1.8] The battery pack according to [1.7], wherein
   the projected portion is a part of the storage body.

The aspect 2 according to the present invention is as described below.
[2.1] A battery pack including:
   a storage body provided with a storage space surrounded by a sealing member pressed in a predetermined direction;
   a battery module stored in the storage space; and
   an engagement portion that engages the storage body and the sealing member with each other and is located laterally to the sealing member with respect to the predetermined direction.
[2.2] The battery pack according to [2.1], wherein
   the engagement portion includes a protrusion protruding from the sealing member, and an engagement structure that engages the storage body and the protrusion with each other.
[2.3] The battery pack according to [2.1] or [2.2], wherein
   the storage body includes a partition wall that separates the battery module and the sealing member from each other, and
   the engagement portion is engaged with the partition wall.
[2.4] The battery pack according to any one of [2.1] to [2.3], further including
   a fastener that fastens predetermined portions of the storage body to each other and extends through the sealing member.

### ADVANTAGEOUS EFFECTS OF INVENTION

According to the aspect 1 of the present invention, sealing of a storage space of a storage body is improved.

According to the aspect 2 of the present invention, sealing of a storage space of a storage body is improved.

### BRIEF DESCRIPTION OF THE DRAWINGS

[Fig. 1] A perspective view of a battery pack according to the embodiment 1.
[Fig. 2] A plan view of the battery pack according to the embodiment 1 with an upper case removed.
[Fig. 3] An enlarged plan view of a part of a side frame according to the embodiment 1.
[Fig. 4] An A-A cross-sectional view of Fig. 3.
[Fig. 5] An enlarged view of a part of Fig. 4.
[Fig. 6] A perspective view of the battery pack according to the embodiment 1.
[Fig. 7] A plan view of the battery pack according to the embodiment 1 with an upper case removed.
[Fig. 8] An enlarged plan view of a part of the side frame according to the embodiment 1.
[Fig. 9] A B-B cross-sectional view of Fig. 8.
[Fig. 10] A C-C cross-sectional view of Fig. 8.

### DESCRIPTION OF EMBODIMENTS

### (Embodiment 1)

Hereinafter, an embodiment 1 according to the present invention is described by using drawings. In all drawings, a similar component is assigned with a similar reference sign, and description thereof is omitted as appropriate.

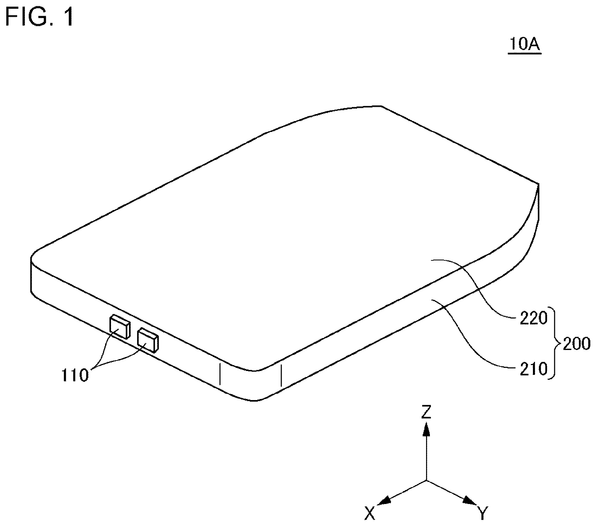

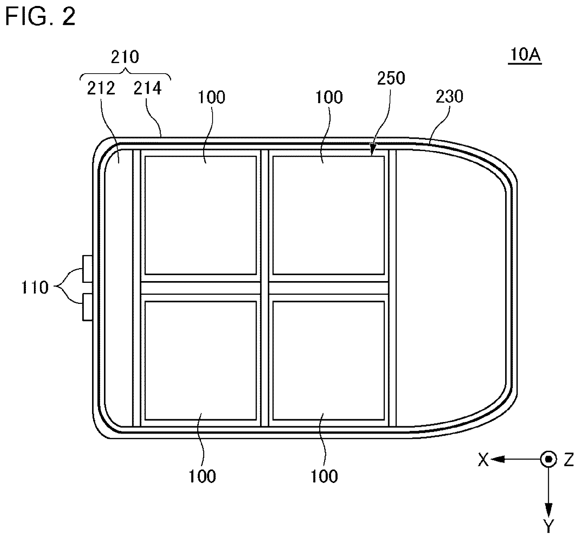

Fig. 1 is a perspective view of a battery pack 10A according to the embodiment 1. Fig. 2 is a plan view of the battery pack 10A according to the embodiment 1 with an upper case 220 removed.

In the embodiment 1, the battery pack 10A is mounted on an automobile. Specifically, the battery pack 10A is mounted between a front wheel and a rear wheel of the automobile. Hereinafter, unless otherwise specified, the battery pack 10A is described as being mounted on an automobile. However, the battery pack 10A is applicable to an application for other than an automobile.

In each drawing, for description, an X direction, a Y direction, and a Z direction are indicated. The X direction indicates a front-rear direction of the battery pack 10A. The Y direction is orthogonal to the X direction. The Y direction indicates a left-right direction of the battery pack 10A. The Z direction is orthogonal to both of the X direction and the Y direction. The Z direction indicates a vertical direction of the battery pack 10A. An arrow indicating the X direction and arrows indicating the Y direction and indicating the Z direction indicate a front direction, a left direction, and an upper direction of the battery pack 10A respectively. In Fig. 2, a white circle with a black dot indicating the Z direction indicates that an arrow indicating the Z direction extends from back to front of a surface of paper. However, a relation between the X direction, the Y direction, and the Z direction, and the front-rear direction, the left-right direction, and the vertical direction of the battery pack 10A is not limited to this example.

In the embodiment 1, the front-rear direction, the left-right direction, and the vertical direction of the battery pack 10A are determined by an automobile mounted with the battery pack 10A. The X direction, the Y direction, and the Z direction indicate a front-rear direction, a left-right direction, and a vertical direction of the automobile respectively. The arrow indicating the X direction, the arrow indicating the Y direction, and the arrow indicating the Z direction indicate a front direction, a left direction, and an upper direction of the automobile respectively. However, the relation between the front-rear direction, the left-right direction, and the vertical direction of the battery pack 10A, and the front-rear direction, the left-right direction, and the vertical direction of the automobile is not limited to this example.

Hereinafter, a direction perpendicular to the Z direction is referred to as a horizontal direction as necessary.

The battery pack 10A includes four battery modules 100 and a storage body 200. The four battery modules 100 include a pair of battery modules 100 on a left side arranged in the X direction and a pair of battery modules 100 on a right side arranged in the X direction. The storage body 200 includes a lower case 210 and an upper case 220. The lower case 210 may be generally referred to, for example, as a tray or a main body portion. The lower case 210 includes a lower plate 212 and a side frame 214. The upper case 220 may be generally referred to, for example, as a cover or a lid portion.

Each battery module 100 includes a plurality of battery cells stacked in the horizontal direction. In each battery module 100, for example, a plurality of battery cell groups each including a plurality of battery cells connected in parallel is connected in series. Alternatively, a plurality of single battery cells may be connected in series.

The front side of the side frame 214 is provided with a pair of terminals 110. The pair of terminals 110 is arranged substantially parallel to the Y direction. The front end portion of each terminal 110 protrudes forward from the front surface of the side frame 214. In an electric path, the four battery modules 100 are connected in series between the pair of terminals 110.

The lower case 210 and the upper case 220 are attached to each other via a sealing member 230. The lower case 210, the upper case 220, and the sealing member 230 form a storage space 250. The four battery modules 100 are stored in the storage space 250.

The lower plate 212 defines a bottom portion of the storage space 250. The side frame 214 defines a side portion of the storage space 250. Specifically, as viewed from the Z direction, the side frame 214 is provided along the outermost circumference of the lower plate 212. The upper case 220 defines a top portion of the storage space 250.

The sealing member 230 is, for example, an elastic material such as rubber. As viewed from the Z direction, the sealing member 230 is provided over the entire circumference of the side frame 214. Thereby, as viewed from the Z direction, the sealing member 230 surrounds the storage space 250. The storage space 250 can be therefore sealed by the sealing member 230 from the external space of the storage body 200.

The number of and arrangement of the battery modules are not limited to the example according to the embodiment 1. The number of battery modules 100 may be, for example, only two, only three, or five or more.

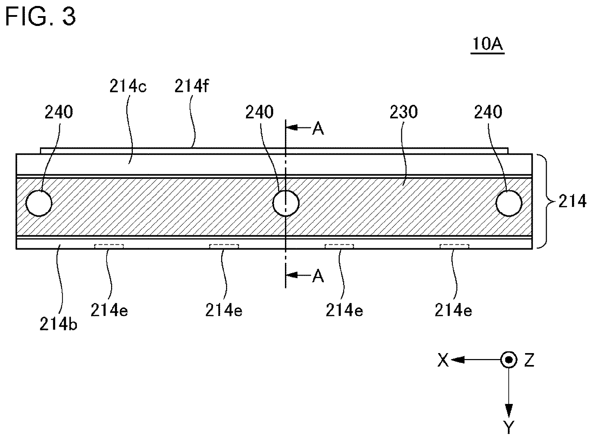

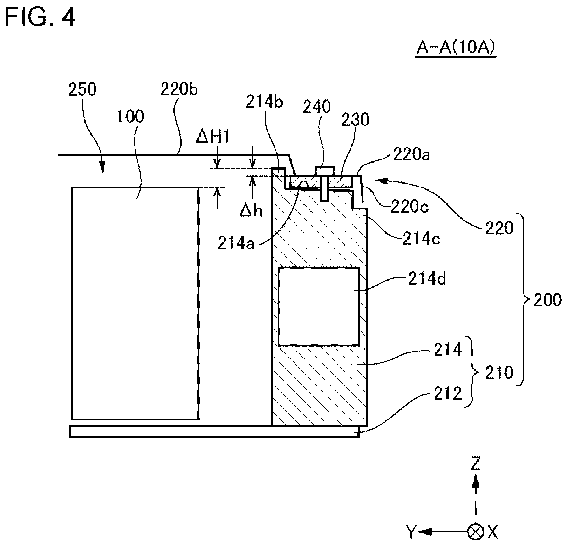

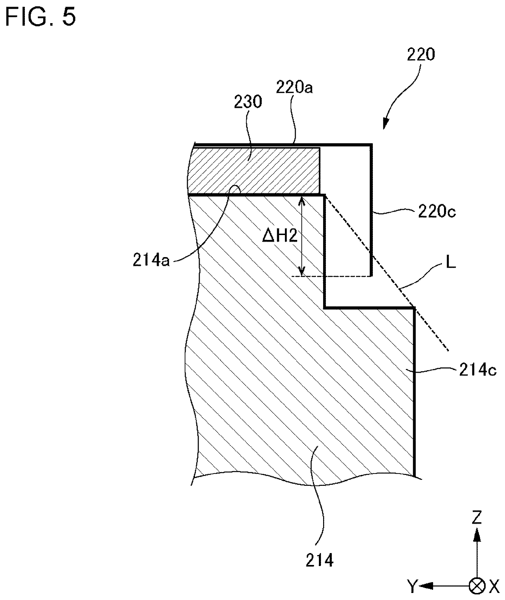

Fig. 3 is an enlarged plan view of a part of the side frame 214 according to the embodiment 1. Fig. 4 is an A-A cross-sectional view of Fig. 3. Fig. 5 is an enlarged view of a part of Fig. 4. In Fig. 3, for simple description, the battery module 100, the lower plate 212, and the upper case 220 illustrated in Fig. 4 are not illustrated. In Fig. 4, for simple description, a pressure release valve 214f illustrated in Fig. 3 is not illustrated. In Fig. 3, a white circle with a black dot indicating the Z direction indicates that an arrow indicating the Z direction extends from back to front of the surface of paper. In Figs. 4 and 5, a white circle with X indicating the X direction indicates that an arrow indicating the X direction extends from front to back of the surface of paper.

As illustrated in Fig. 4, the side frame 214 includes a lower attachment portion 214a, a partition wall 214b, and a projected portion 214c. The upper case 220 includes an upper attachment portion 220a, an upper cover portion 220b, and a side cover portion 220c.

With reference to Figs. 3 and 4, an attachment structure of the lower case 210 and the upper case 220 is described.

As illustrated in Fig. 4, the lower attachment portion 214a and the upper attachment portion 220a are attached to each other via the sealing member 230. The lower attachment portion 214a is at least a part of the upper surface of the side frame 214. The upper attachment portion 220a is at least a part of the outer circumference portion of the upper case 220. As illustrated in Fig. 3, the lower attachment portion 214a and the upper attachment portion 220a are fixed to each other by a plurality of fasteners 240. The plurality of fasteners 240 is disposed in a predetermined interval over the entire circumference of the side frame 214. As illustrated in Fig. 4, each fastener 240 is fastened to the lower attachment portion 214a through the upper attachment portion 220a and the sealing member 230 substantially in parallel to the Z direction. In the embodiment 1, each fastener 240 is a bolt. However, each fastener 240 may be a fastener other than a bolt.

With reference to Figs. 3 and 4, a discharge structure of gas from the storage space 250 is described. In the storage space 250, gas may be generated from the battery module 100.

As illustrated in Fig. 4, a gas discharge path 214d is provided inside the side frame 214. The gas discharge path 214d is hollow. As illustrated in Fig. 3, the inside surface of the side frame 214 is provided with a plurality of gas discharge holes 214e. As viewed from the Z direction, the plurality of gas discharge holes 214e is disposed in a predetermined interval over the entire circumference of the side frame 214. The storage space 250 and the gas discharge path 214d communicate with each other via the plurality of gas discharge holes 214e. As illustrated in Fig. 3, the pressure release valve 214f is provided on a part of the outside surface of the side frame 214. Accordingly, the gas generated from the battery module 100 in the storage space 250 can be discharged from the pressure release valve 214f through the gas discharge hole 214e and the gas discharge path 214d to the outside of the storage body 200.

With reference to Figs. 3 and 4, the inside structure of the storage body 200 in the Y direction with respect to the sealing member 230 is described.

As viewed from the Z direction, the upper cover portion 220b is surrounded by the upper attachment portion 220a. The upper cover portion 220b covers the storage space 250 from above.

The partition wall 214b protrudes upward from the lower attachment portion 214a. As illustrated in Fig. 4, the partition wall 214b is provided on the inside end portion of the lower attachment portion 214a. Thereby, the partition wall 214b is located between the battery module 100 and the sealing member 230. For this reason, the partition wall 214b can separate the battery module 100 and the sealing member 230 from each other. As illustrated in Fig. 3, as viewed from the Z direction, the partition wall 214b continuously extends over the entire circumference of the side frame 214. However, the partition wall 214b may be partially lacked in the entire circumference of the side frame 214.

As illustrated in Fig. 4, at least a portion of the partition wall 214b is located at a higher elevation than the upper surface of the battery module 100. In the example illustrated in Fig. 4, the upper surface of the partition wall 214b is located at a higher elevation than the upper surface of the battery module 100 by a height ΔH1. Under a predetermined condition such as charge/discharge of the battery module 100, there is a possibility that high-temperature gas is generated from the battery module 100. According to the embodiment 1, the partition wall 214b can function as at least a portion of a structure for inhibiting the high-temperature gas from being directly expelled to the sealing member 230. In the embodiment 1, accordingly, breakage of the sealing member 230 caused by direct ejection of the high-temperature gas to the sealing member 230 can be reduced. For this reason, the sealing of the storage space 250 can be improved in the embodiment 1.

As illustrated in Fig. 4, at least a portion of the partition wall 214b is located at a higher elevation than the upper surface of the sealing member 230. In the example illustrated in Fig. 4, the upper surface of the partition wall 214b is located at a higher elevation than the upper surface of the sealing member 230 by a height Δh. Thereby, the partition wall 214b can easily function as at least a portion of a structure for inhibiting the above-described high-temperature gas from being directly expelled to the sealing member 230. The embodiment 1 can accordingly reduce breakage of the sealing member 230 caused by direct expulsion of the high-temperature gas to the sealing member 230. For this reason, the sealing of the storage space 250 can be improved in the embodiment 1.

As illustrated in Fig. 3, at least a portion of the partition wall 214b is disposed above each gas discharge hole 214e. The above-described high-temperature gas is likely to be expelled toward the gas discharge hole 214e or toward an upper side of the gas discharge hole 214e. In the embodiment 1, however, the partition wall 214b can inhibit the high-temperature gas from being directly expelled to the sealing member 230 even if the high-temperature gas is expelled toward the upper side of the gas discharge hole 214e.

A partition wall located between the battery module 100 and the sealing member 230 is not limited to the partition wall 214b according to the embodiment 1. In the embodiment 1, the partition wall 214b is a part of the lower case 210. However, the partition wall may be a part of the upper case 220. Alternatively, the partition wall may be a member independent of the storage body 200.

With reference to Figs. 3 to 5, a structure of an outside of the storage body 200 in the Y direction with respect to the sealing member 230 is described.

As viewed from the Z direction, the side cover portion 220c is provided on an outer edge of the upper attachment portion 220a. As illustrated in Fig. 4, the lower end of the side cover portion 220c protrudes downward from the outer edge of the upper attachment portion 220a. The side cover portion 220c covers a surface of the sealing member 230 on the opposite side of the storage space 250. In the example illustrated in Fig. 4, the lower end of the side cover portion 220c is located at a lower elevation than the upper end of the partition wall 214b. The lower end of the side cover portion 220c is located on the outside of the outer edge of the upper attachment portion 220a.

As illustrated in Fig. 5, at least a portion of the side cover portion 220c is located at a lower elevation than the lower surface of the sealing member 230. In the example illustrated in Fig. 5, the lower end of the side cover portion 220c is located at a lower elevation than the lower surface of the sealing member 230 by a height ΔH2. Under a predetermined condition such as washing of an automobile mounted with the battery pack 10A, there is a possibility that high-pressure water is expelled from obliquely below on the outside of the storage body 200. In the embodiment 1, the side cover portion 220c can function as at least a portion of a structure for inhibiting the water from being directly expelled to the sealing member 230. The embodiment 1 can accordingly reduce breakage of the sealing member 230 caused by direct expulsion of the water to the sealing member 230. For this reason, the sealing of the storage space 250 can be improved in the embodiment 1.

As illustrated in Fig. 5, the projected portion 214c is located below the side cover portion 220c. The projected portion 214c projects outward more than the side cover portion 220c. As illustrated in Fig. 3, as viewed from the Z direction, the projected portion 214c continuously extends over the entire circumference of the side frame 214. However, the projected portion 214c may be partially lacked in the entire circumference of the side frame 214. As described above, under a predetermined condition, there is a possibility that high-pressure water is expelled from obliquely below on the outside of the storage body 200. In the embodiment 1, the projected portion 214c can function as at least a portion of a structure for inhibiting the water from being directly expelled to the sealing member 230.

As illustrated in Fig. 5, the sealing member 230 and the projected portion 214c are separated from each other via at least a portion of the side cover portion 220c. Specifically, as illustrated in Fig. 5, a virtual line L between the outermost corner of the lower attachment portion 124a and the outermost corner of the projected portion 214c intersects with the side cover portion 220c. Under a predetermined condition such as washing of an automobile mounted with the battery pack 10A, there is a possibility that high-pressure water is expelled along the virtual line L from the outside of the storage body 200. According to the embodiment 1, the projected portion 214c and the side cover portion 220c can function as at least a portion of a structure for inhibiting the water from being directly expelled to the sealing member 230. The embodiment 1 can accordingly reduce breakage of the sealing member 230 caused by direct expulsion of the water to the sealing member 230. For this reason, the sealing of the storage space 250 can be improved in the embodiment 1.

A cover portion covering a surface of the sealing member 230 on the opposite side of the storage space 250 is not limited to the side cover portion 220c according to the embodiment 1. In the embodiment 1, the side cover portion 220c is a part of the upper case 220. However, the cover portion may be a part of the lower case 210. Alternatively, the cover portion may be a member independent of the storage body 200.

A projected portion projecting outward more than the side cover portion 220c is not limited to the projected portion 214c according to the embodiment 1. In the embodiment 1, the projected portion 214c is a part of the lower case 210. However, the projected portion may be a part of the upper case 220. Alternatively, the projected portion may be a member independent of the storage body 200.

As described above, while with reference to the drawings, the embodiment 1 according to the present invention has been described, these are exemplification of the present invention and various configurations other than the above are employable.

### (Embodiment 2)

Hereinafter, an embodiment 2 according to the present invention is described by using drawings. In all drawings, a similar component is assigned with a similar reference sign, and description thereof is omitted as appropriate.

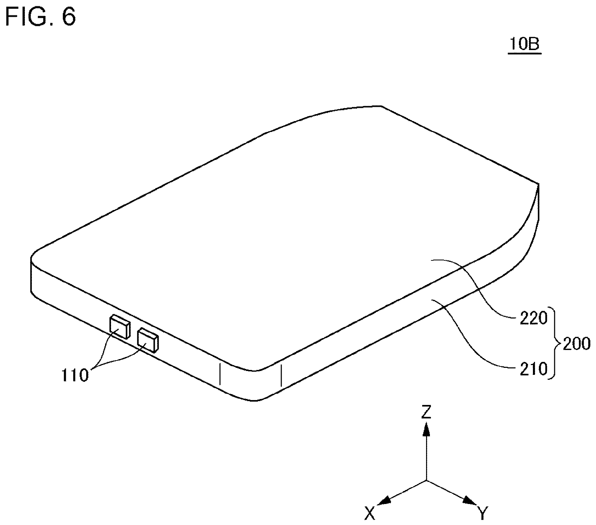

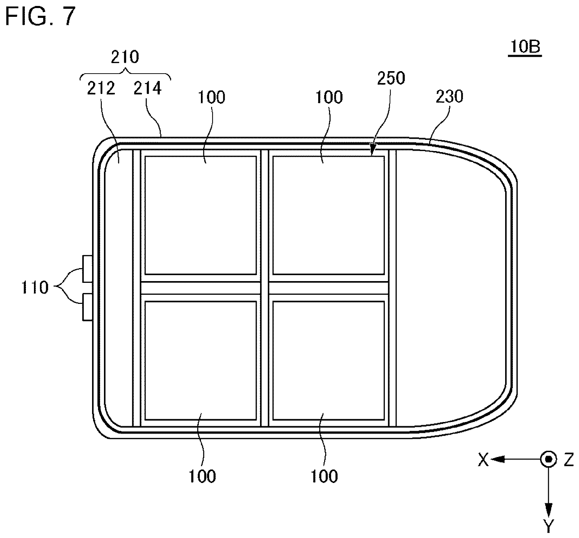

Fig. 6 is a perspective view of a battery pack 10B according to the embodiment 2. Fig. 7 is a plan view of the battery pack 10B according to the embodiment 2 with an upper case 220 removed.

In the embodiment 2, the battery pack 10B is mounted on an automobile. Specifically, the battery pack 10B is mounted between a front wheel and a rear wheel of the automobile. Hereinafter, unless otherwise specified, the battery pack 10B is described as being mounted on an automobile. However, the battery pack 10B is applicable to an application for other than an automobile.

In each drawing, for description, an X direction, a Y direction, and a Z direction are indicated. The X direction indicates a front-rear direction of the battery pack 10B. The Y direction is orthogonal to the X direction. The Y direction indicates a left-right direction of the battery pack 10B. The Z direction is orthogonal to both of the X direction and the Y direction. The Z direction indicates a vertical direction of the battery pack 10B. An arrow indicating the X direction and arrows indicating the Y direction and indicating the Z direction indicate a front direction, a left direction, and an upper direction of the battery pack 10B respectively. In Fig. 7, a white circle with a black dot indicating the Z direction indicates that an arrow indicating the Z direction extends from back to front of a surface of paper. However, a relation between the X direction, the Y direction, and the Z direction, and the front-rear direction, the left-right direction, and the vertical direction of the battery pack 10B is not limited to this example.

In the embodiment 2, the front-rear direction, the left-right direction, and the vertical direction of the battery pack 10B are determined by an automobile mounted with the battery pack 10B. The X direction, the Y direction, and the Z direction indicate a front-rear direction, a left-right direction, and a vertical direction of the automobile respectively. The arrow indicating the X direction, the arrow indicating the Y direction, and the arrow indicating the Z direction indicate a front direction, a left direction, and an upper direction of the automobile respectively. However, the relation between the front-rear direction, the left-right direction, and the vertical direction of the battery pack 10B, and the front-rear direction, the left-right direction, and the vertical direction of the automobile is not limited to this example.

Hereinafter, a direction perpendicular to the Z direction is referred to as a horizontal direction as necessary.

The battery pack 10B includes four battery modules 100 and a storage body 200. The four battery modules 100 include a pair of battery modules 100 on a left side arranged in the X direction and a pair of battery modules 100 on a right side arranged in the X direction. The storage body 200 includes a lower case 210 and an upper case 220. The lower case 210 may be generally referred to, for example, as a tray or a main body portion. The lower case 210 includes a lower plate 212 and a side frame 214. The upper case 220 may be generally referred to, for example, as a cover or a lid portion.

Each battery module 100 includes a plurality of battery cells stacked in the horizontal direction. In each battery module 100, for example, a plurality of battery cell groups each including a plurality of battery cells connected in parallel is connected in series. Alternatively, a plurality of single battery cells may be connected in series.

The front side of the side frame 214 is provided with a pair of terminals 110. The pair of terminals 110 is arranged substantially parallel to the Y direction. The front end portion of each terminal 110 protrudes forward from the front surface of the side frame 214. In an electric path, the four battery modules 100 are connected in series between the pair of terminals 110.

The lower case 210 and the upper case 220 are attached to each other via a sealing member 230. The lower case 210, the upper case 220, and the sealing member 230 form a storage space 250. The four battery modules 100 are stored in the storage space 250.

The lower plate 212 defines a bottom portion of the storage space 250. The side frame 214 defines a side portion of the storage space 250. Specifically, as viewed from the Z direction, the side frame 214 is provided along the outermost circumference of the lower plate 212. The upper case 220 defines a top portion of the storage space 250.

The sealing member 230 is, for example, an elastic material such as rubber. As viewed from the Z direction, the sealing member 230 is provided over the entire circumference of the side frame 214. Thereby, as viewed from the Z direction, the sealing member 230 surrounds the storage space 250. The storage space 250 can be therefore sealed by the sealing member 230 from the external space of the storage body 200.

The number of and arrangement of the battery modules are not limited to the example according to the embodiment 2. The number of battery modules 100 may be, for example, only two, only three, or five or more.

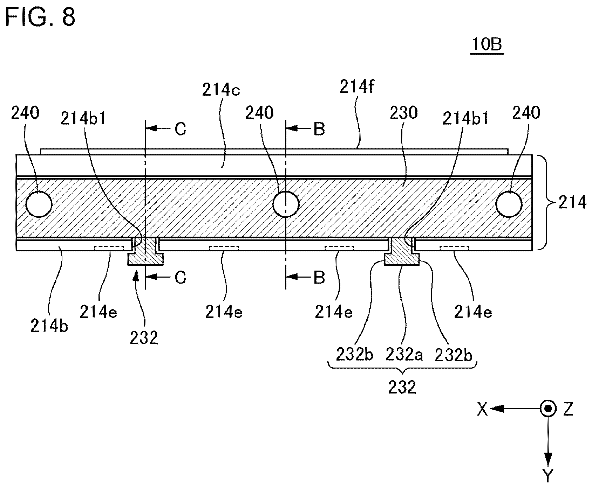

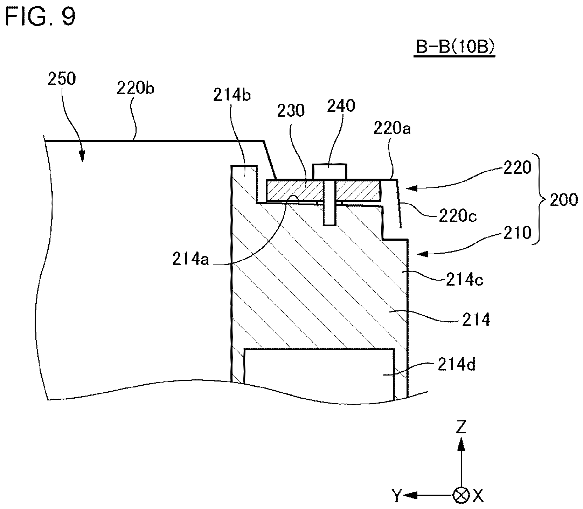

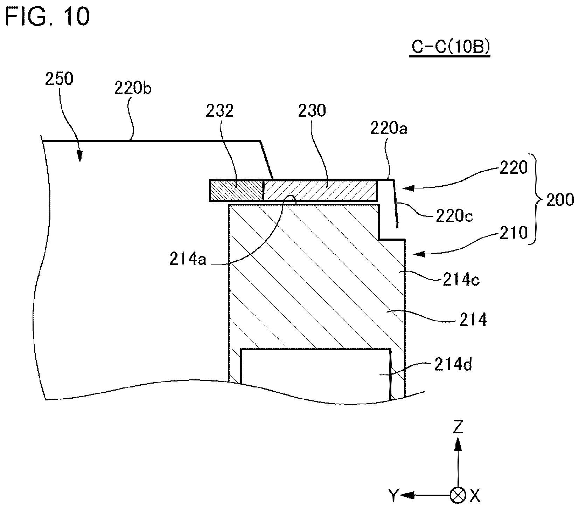

Fig. 8 is an enlarged plan view of a part of the side frame 214 according to the embodiment 2. Fig. 9 is a B-B cross-sectional view of Fig. 8. Fig. 10 is a C-C cross-sectional view of Fig. 8. In Fig. 8, for simple description, the lower plate 212 and the upper case 220 illustrated in Fig. 9 are not illustrated. In Figs. 9 and 10, for simple description, a pressure release valve 214f illustrated in Fig. 8 is not illustrated. In the storage space 250 in the cross-section illustrated in Figs. 9 and 10, an unillustrated battery module 100 is disposed. In Fig. 8, a white circle with a black dot indicating the Z direction indicates that an arrow indicating the Z direction extends from back to front of the surface of paper. In Figs. 9 and 10, a white circle with X indicating the X direction indicates that an arrow indicating the X direction extends from front to back of the surface of paper.

As illustrated in Fig. 9, the side frame 214 includes a lower attachment portion 214a, a partition wall 214b, and a projected portion 214c. The upper case 220 includes an upper attachment portion 220a, an upper cover portion 220b, and a side cover portion 220c.

With reference to Figs. 8 and 9, an attachment structure of the lower case 210 and the upper case 220 is described.

As illustrated in Fig. 9, the lower attachment portion 214a and the upper attachment portion 220a are attached to each other via the sealing member 230. The lower attachment portion 214a is at least a part of the upper surface of the side frame 214. The upper attachment portion 220a is at least a part of the outer circumference portion of the upper case 220. As illustrated in Fig. 8, the lower attachment portion 214a and the upper attachment portion 220a are fixed to each other by a plurality of fasteners 240. As viewed from the Z direction, the plurality of fasteners 240 are disposed in a predetermined interval over the entire circumference of the sealing member 230. However, the number of fasteners 240 provided in the entire circumference of the sealing member 230 may be only one. As illustrated in Fig. 9, each fastener 240 is fastened to the lower attachment portion 214a through the upper attachment portion 220a and the sealing member 230 substantially in parallel to the Z direction. The sealing member 230 is pressed substantially in parallel to the Z direction by fastening the lower attachment portion 214a and the upper attachment portion 220a to each other by the fastener 240. With this, the sealing of the sealing material 230 is improved. In the embodiment 2, each fastener 240 is a bolt. In one example, an unillustrated nut through which a tip end of the fastener 240 extends is provided inside the side frame 214. However, each fastener 240 may be a fastener other than a bolt.

In the embodiment 2, the sealing member 230 is provided with a through-hole through which each fastener 240 extends. However, a structure in which the fastener 240 extends through the sealing member 230 is not limited to this example. For example, as viewed from the Z direction, a notch may be provided on at least one of the inner circumference edge and the outer circumference edge of the sealing member 230. In this example, each fastener 240 can extend through the sealing member 230 via the notch of the sealing member 230.

With reference to Figs. 8 and 9, a discharge structure of gas from the storage space 250 is described. In the storage space 250, gas may be generated from the battery module 100.

As illustrated in Figs. 9 and 10, a gas discharge path 214d is provided inside the side frame 214. The gas discharge path 214 is hollow. As illustrated in Fig. 8, the inside surface of the side frame 214 is provided with a plurality of gas discharge holes 214e. As viewed from the Z direction, the plurality of gas discharge holes 214e is disposed in a predetermined interval over the entire circumference of the side frame 214. The storage space 250 and the gas discharge path 214d communicate with each other via the plurality of gas discharge holes 214e. As illustrated in Fig. 8, the pressure release valve 214f is provided on a part of the outside surface of the side frame 214. Accordingly, the gas generated from the battery module 100 in the storage space 250 can be discharged from the pressure release valve 214f through the gas discharge hole 214e and the gas discharge path 214d to the outside of the storage body 200.

With reference to Figs. 8 and 9, the inside structure of the storage body 200 in the Y direction with respect to the sealing member 230 is described.

As viewed from the Z direction, the upper cover portion 220b is surrounded by the upper attachment portion 220a. The upper cover portion 220a covers the storage space 250 from above.

The partition wall 214b protrudes upward from the lower attachment portion 214a. As illustrated in Fig. 9, the partition wall 214b is provided on the inside end portion of the lower attachment portion 214a. Thereby, the partition wall 214b is located between the battery module 100 and the sealing member 230. For this reason, the partition wall 214b can separate the battery module 100 and the sealing member 230 from each other. As illustrated in Fig. 8, as viewed from the Z direction, the partition wall 214b continuously extends over the entire circumference of the side frame 214 except a plurality of grooves 214b1. However, the shape of the partition wall 214b viewed from the Z direction is not limited to this example. Under a predetermined condition such as charge/discharge of the battery module 100, there is a possibility that high-temperature gas is generated from the battery module 100. The partition wall 214b can function as at least a portion of a structure for inhibiting the high-temperature gas from being directly expelled to the sealing member 230.

With reference to Figs. 8 and 9, a structure of an outside of the storage body 200 in the Y direction with respect to the sealing member 230 is described.

As viewed from the Z direction, the side cover portion 220c is provided on the outer edge of the upper attachment portion 220a. As illustrated in Figs. 9 and 10, the lower end of the side cover portion 220c protrudes downward from the outer edge of the upper attachment portion 220a. The side cover portion 220c covers a surface of the sealing member 230 on the opposite side of the storage space 250. Under a predetermined condition such as washing of an automobile mounted with the battery pack 10A, there is a possibility that high-pressure water is expelled from the outside of the storage body 200. The side cover portion 220c can function as at least a portion of a structure for inhibiting the water from being directly expelled to the sealing member 230.

As illustrated in Fig. 10, the projected portion 214c is located below the side cover portion 220c. The projected portion 214c projects outward more than the side cover portion 220c. As illustrated in Fig. 8, as viewed from the Z direction, the projected portion 214c continuously extends over the entire circumference of the side frame 214. However, the projected portion 214c may be partially lacked in the entire circumference of the side frame 214. Under a predetermined condition such as washing of an automobile mounted with the battery pack 10B, there is a possibility that high-pressure water is expelled from obliquely below on the outside of the storage body 200. The projected portion 214c can function as at least a portion of a structure for inhibiting the water from being directly expelled to the sealing member 230.

With reference to Figs. 8 to 10, the sealing member 230 is described.

As illustrated in Fig. 8, as viewed from the Z direction, the sealing member 230 is disposed along the partition wall 214b. In other words, the sealing member 230 is aligned by the partition wall 214b. This can restrict the sealing member 230 from being displaced to the storage space 250 side. For this reason, the sealing member 230 can be accurately positioned. Accordingly, sealing of the storage space 250 can be improved.

As illustrated in Fig. 8, a plurality of engagement portions 232 is provided on the side portion of the sealing member 230 on the storage space 250 side. As viewed from the Z direction, the plurality of engagement portions 232 is disposed in a predetermined interval over the entire circumference of the sealing member 230. However, the number of engagement portions 232 provided in the entire circumference of the sealing member 230 may be only one. The position where the engagement portion 232 is disposed is not limited to the position according to the embodiment 2. The engagement portion 232 may be provided, for example, on the side portion of the sealing member 230 opposite to the storage space 250. Alternatively, the engagement portion 232 may be provided on both of the side portion of the sealing member 230 on the storage space 250 side and the side portion of the sealing member 230 opposite to the storage space 250.

As illustrated in Fig. 8, as viewed from the Z direction, each engagement portion 232 has a substantially T shape. Specifically, as viewed from the Z direction, each engagement portion 232 includes a protrusion 232a and a pair of engagement protrusions 232b. As viewed from the Z direction, the protrusion 232a protrudes from the side portion of the sealing member 230 on the storage space 250 side toward the storage space 250 side. As viewed from the Z direction, the pair of engagement protrusions 232b protrudes from both side portions of the tip end of the protrusion 232a toward sides opposite to each other.

As illustrated in Fig. 8, each of the plurality of protrusions 232a is disposed in each of a plurality of grooves 214b1 provided on the partition wall 214b. In other words, each protrusion 232a is an engagement structure for engaging the partition wall 214b and the sealing member 230 with each other. This can restrict the sealing member 230 from being circumferentially displaced about the storage space 250. For this reason, the sealing member 230 can be accurately positioned. Accordingly, the sealing of the storage space 250 can be improved.

As illustrated in Fig. 8, each of the pair of engagement protrusions 232b provided to each protrusion 232a can contact with the inner circumference surface of the partition wall 214b on the storage space 250 side. In other words, each engagement protrusion 232b is an engagement structure for engaging the partition wall 214b and the protrusion 232a with each other. This can restrict the sealing member 230 from being displaced to the outside of the storage space 250. For this reason, the sealing member 230 can be accurately positioned. Accordingly, the sealing of the storage space 250 can be improved.

In the embodiment 2, each engagement portion 232 is located laterally to the sealing member 230 with respect to the Z direction. For this reason, the sealing of the sealing member 230 can be less susceptible to the engagement portion 232 compared with when the engagement portion 232 is provided on the position overlapped with the sealing member 230 in the Z direction. Accordingly, the sealing of the storage space 250 can be improved.

The shape of the engagement portion 232 is not limited to the example illustrated in Fig. 8.

As viewed from the Z direction, each engagement protrusion 232b may enter, for example, a concave portion provided on the side surface of each groove 214b1. Also in this example, the engagement protrusion 232b can be an engagement structure for engaging the partition wall 214b and the protrusion 232a with each other.

As viewed from the Z direction, the engagement portion 232 may have, for example, a substantially L shape. In other words, as viewed from the Z direction, the engagement protrusion 232b may protrude from only either of both side portions of each protrusion 232a. Also in this example, the engagement protrusion 232b can be an engagement structure for engaging the partition wall 214b and the protrusion 232a with each other.

As viewed from the Z direction, the engagement portion 232 may include only the protrusion 232a without the engagement protrusion 232b. Also, in this example, the protrusion 232a can be an engagement structure for engaging the partition wall 214b and the sealing member 230 with each other.

In the embodiment 2, the engagement protrusion 232b protrudes from the protrusion 232a substantially in parallel to the horizontal direction. However, the engagement protrusion 232b may protrude upward or downward from the protrusion 232a. For example, the engagement protrusion 232b may enter a hole provided on the bottom surface of the groove 214b1. Also in this example, the engagement protrusion 232b can be an engagement structure for engaging the side frame 214 and the protrusion 232a with each other.

As described above, while with reference to the drawings, the embodiment 2 according to the present invention has been described, these are exemplification of the present invention and various configurations other than the above are employable.

The battery pack 10B according to the embodiment 2 may include, for example, a configuration similar to the configuration described for the battery pack 10A according to the embodiment 1. For example, in the embodiment 2, at least a portion of the partition wall 214b may be located at a higher elevation than the upper surface of the battery module 100 similarly to the embodiment 1.

This application claims priorities based on Japanese patent application No. 2022-127754 filed on August 10, 2022 and Japanese patent application No. 2022-127755 filed on August 10, 2022, the disclosure of which is incorporated herein in its entirety by reference.

### REFERENCE SIGNS LIST

10A, 10B Battery pack, 100 Battery module, 110 Terminal, 200 Storage body, 210 Lower case, 212 Lower plate, 214 Side frame, 214a Lower attachment portion, 214b Partition wall, 214b1 Groove, 214c Projected portion, 214d Gas discharge path, 214e Gas discharge hole, 214f Pressure release valve, 220 Upper case, 220a Upper attachment portion, 220b Upper cover portion, 220c Side cover portion, 230 Sealing member, 232 Engagement portion, 232a Protrusion, 232b Engagement protrusion, 240 Fastener, 250 Storage space, L Virtual line

## Claims

1. A battery pack comprising:
a storage body provided with a storage space surrounded by a sealing member;
a battery module stored in the storage space; and
a partition wall located between the battery module and the sealing member, wherein
at least a portion of the partition wall is located at a higher elevation than an upper surface of the battery module.

2. The battery pack according to claim 1, wherein
the at least a portion of the partition wall is located at a higher elevation than an upper surface of the sealing member.

3. The battery pack according to claim 1 or 2, wherein
the storage body is provided with a gas discharge hole to discharge gas generated from the storage space, and
at least a portion of the partition wall is disposed above the gas discharge hole.

4. The battery pack according to claim 1 or 2, wherein
the partition wall is a part of the storage body.

5. A battery pack comprising:
a storage body provided with a storage space surrounded by a sealing member;
a battery module stored in the storage space; and
a cover portion that covers a surface of the sealing member on an opposite side of the storage space, wherein
at least a portion of the cover portion is located at a lower elevation than a lower surface of the sealing member.

6. The battery pack according to claim 5, wherein
the cover portion is a part of the storage body.

7. The battery pack according to claim 5 or 6, further comprising
a projected portion provided below the cover portion and projecting outward more than the cover portion.

8. The battery pack according to claim 7, wherein
the projected portion is a part of the storage body.

9. The battery pack according to claim 1, further comprising
an engagement portion that engages the partition wall and the sealing member with each other.

10. The battery pack according to claim 9, wherein
the engagement portion includes a protrusion protruding from the sealing member, and an engagement structure that engages the storage body and the protrusion with each other.

11. The battery pack according to claim 9 or 10, further comprising
a fastener that fastens predetermined portions of the storage body to each other and extends through the sealing member.
